# EUROPEAN PATENT APPLICATION

(11) **EP 2 243 670 A1**
(43) Date of publication of application: **27.10.2010**
(21) Application number: 09168332.6
(22) Date of filing: 20.08.2009
(51) Int. Cl.: B60R 22/04, A63G 3/00

(54) **Side Facing Restraint System**

(30) Priority: 22.04.2009 US 427997
(71) Applicant: BAE Systems Safety Products Inc., Pompano Beach, FL Florida 33069 (US)
(72) Inventor: Kump, Marianne, Pompano Beach, Florida 33069 (US); Walker, Andrew, Pompano Beach , Florida 33069 (US); Meier-Arndt, Stefan, 59755 Amsberg (DE)
(74) Representative: Burrows, Anthony Gregory

(57) **Abstract**

A high mobility restraint for a side facing vehicle occupant 100 allows the occupant's trailing shoulder 102 to rotate forward during the vehicle collision in a controlled, limited manner after the restraint is activated, and allows the occupant's lower torso to move in a controlled, limited manner in the vehicle direction of travel during the vehicle collision after the restraint is activated.

## Description

### SIDE FACING RESTRAINT SYSTEM

The invention relates to a restraint system for an occupant of an ambulance or other vehicle, such as a paramedic, who sits at the side of the vehicle, facing inward toward the vehicle's longitudinal centerline (sideways relative to the direction of travel of the Vehicle). The occupant may need to be able to move between seated and standing positions (and positions in between, such as kneeling or squatting to work), while still being restrained at all times.

US Patent No. 7,481,399, the disclosure of which is incorporated by reference, shows a restraint system for a front-facing occupant who needs to be able to move around in this manner. The restraint shown in that Patent is designed for a forward facing occupant and therefore is not suitable for use as a side facing restraint. For example, this prior art restraint includes technical features that result in rapid torso restraint with unrestrained head movement, which would result in unacceptably high neck side injury values for an occupant who is oriented sideways relative to the crash direction.

According to one aspect of the present invention, there is provided a method of restraining a high mobility vehicle occupant who is facing sideways in the vehicle relative to the vehicle's direction of travel in the event of a vehicle collision, the occupant having a leading shoulder and a trailing shoulder, the method comprising the steps of:
activating one or more belt webbing retractors of the restraint in the event of a vehicle collision;
allowing the occupant's trailing shoulder to rotate forward during the vehicle collision in a controlled, limited manner after the restraint is activated; and
allowing the occupant's lower torso to move in the vehicle direction of travel during the vehicle collision in a controlled, limited manner after the restraint is activated.

According to another aspect of the present invention, there is provided a high mobility restraint for a vehicle occupant who is facing sideways in the vehicle relative to the vehicle's direction of travel and who has a leading shoulder and a trailing shoulder, the restraint comprising:
means for activating one or more belt webbing retractors of the restraint in the event of a vehicle collision;
means for allowing the occupant's trailing shoulder to rotate forward during the vehicle collision in a controlled, limited manner after the restraint is activated; and
means for allowing the occupant's lower torso to move in a controlled, limited manner in the vehicle direction of travel during the vehicle collision after the restraint is activated.

According to a further aspect of the present invention, there is provided a high mobility belt webbing restraint system for helping to restrain a side facing occupant of a vehicle, the occupant having a leading shoulder and a trailing shoulder, the system comprising:
a shoulder restraint assembly including a first shoulder belt for the leading shoulder of the occupant and a first shoulder belt retractor for retracting the first shoulder belt, the first shoulder belt being made from belt webbing having a selected elongation characteristic, and the first shoulder belt retractor exhibiting a film spool effect;
the shoulder restraint assembly also including a second shoulder belt for the trailing shoulder of the occupant and a second shoulder belt retractor for retracting the second shoulder belt, the second shoulder belt being made from belt webbing having a selected elongation characteristic, and the second shoulder belt retractor exhibiting a film spool effect;
a lap restraint assembly including a first lap belt for the trailing side of the occupant, a first lap belt retractor for retracting the first lap belt, and a first webbing grabber associated with the first lap belt retractor, the first lap belt being made from belt webbing having a selected elongation characteristic; and
the lap restraint assembly also including a second lap belt for the leading side of the occupant and a second lap belt retractor for retracting the second lap belt and a second webbing grabber associated with the second lap belt retractor, the second lap belt being made from belt webbing having a selected elongation characteristic.

In order that the invention may be clearly and completely disclosed, reference will now be made, by way of example, to the accompanying drawings, in which:
Fig. 1 is a top plan illustration of a vehicle incorporating several side facing restraints;
Fig. 2 is a schematic perspective illustration of a side-facing restraint viewed from a position looking laterally outward at the restraint;
Fig. 3 is a schematic illustration of a retractor assembly including a webbing grabber that forms part of the restraint of Fig. 2; and
Fig. 4 and 5 are schematic illustrations showing movement of an occupant's torso, in relation to shoulder belts that form part of the restraint of Fig. 2, in a crash event.

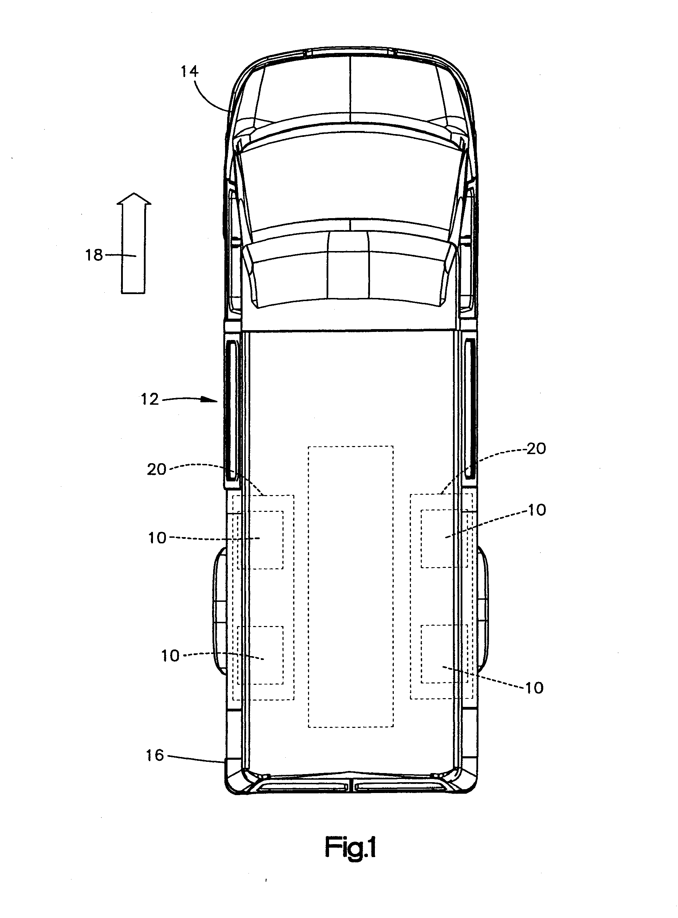

Fig. 1 is a schematic top plan view of a vehicle 12 incorporating one or more restraints 10 that are embodiments of the invention. The illustrated vehicle 12 is an ambulance having a front end 14 and a back end 16 and traveling in a direction indicated by the arrow 18. Left and right side benches 20 inside the ambulance 12 provide seating for paramedics or other medical personnel. Associated with each bench 20 is one or more of the restraints 10. The restraints 10 are side-facing restraints because the occupant faces toward the longitudinal centerline of the vehicle 12 to treat a patient, thus facing in a sideways direction compared to the direction of travel 18 of the vehicle.

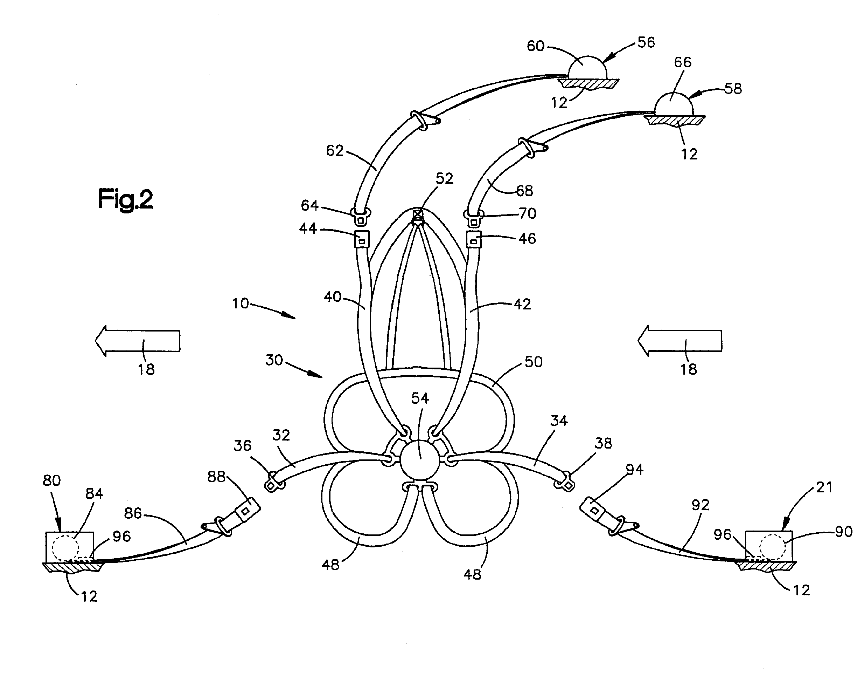

The restraint 10 (Fig. 2) includes a harness 30. The harness 30 includes a right lap harness portion 32 and a left lap harness portion 34. (The terms left and right are used herein to describe the portions of the restraint 10 as it is being worn by the occupant.) The right lap harness portion 32 terminates in a quick disconnection assembly 36. The left lap harness portion 34 terminates in a quick disconnection assembly 38.

The harness 30 also includes a right shoulder harness portion 40 and a left shoulder harness portion 42. The right shoulder harness portion 40 terminates in a quick disconnection device 44. The left shoulder harness portion 42 terminates in a quick disconnection device 46.

The harness 30 also includes two leg loops 48 and a rear harness portion 50. A Y-shaped back harness portion 52 is connected between the rear harness portion 50 and the shoulder harness portions 40 and 42. The various portions of the harness 30 are secured together at a center connector 54. In another embodiment, the harness portions could all be included as part of a vest that the occupant wears, for ease of putting on.

The right and left shoulder harness portions 40 and 42 are connected to the vehicle by respective right and left shoulder retractor assemblies 56 and 58. Specifically, the right shoulder harness portion 40 is connected with the vehicle 12 by a right shoulder retractor 56 assembly that includes a right shoulder belt retractor 60 and a length of right shoulder belt webbing 62. The right shoulder belt webbing 62 terminates in a quick disconnection assembly 64. The quick disconnection assembly 64 is engageable with the mating part 44 of the right shoulder harness portion 40.

Similarly, the left shoulder harness portion 42 is connected with the vehicle 12 by a left shoulder belt retractor assembly 58 that includes a left shoulder belt retractor 66 and a length of left shoulder belt webbing 68. The left shoulder belt webbing 68 terminates in a quick disconnection assembly 70. The quick disconnection assembly 70 is engageable with the mating part 46 of the left shoulder harness portion 42.

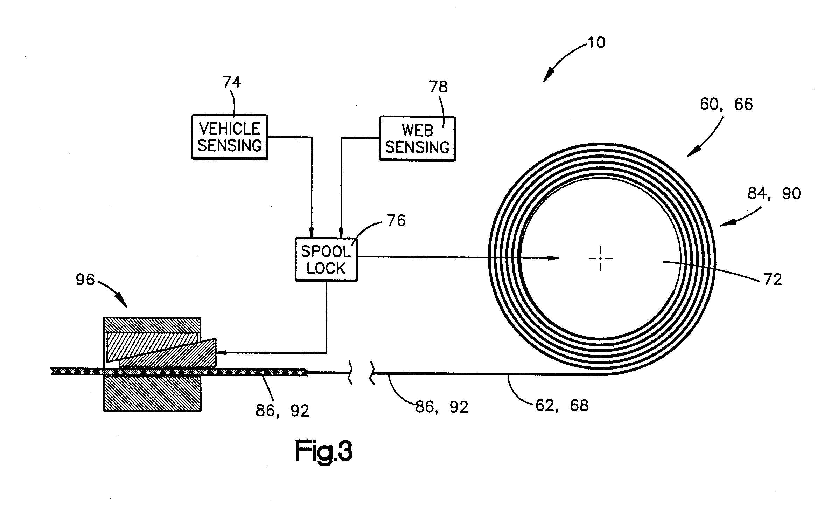

Each one of the left and right shoulder belt retractors 60 and 66 is an emergency locking retractor having a spool 72 on which belt webbing is wound and a return spring. (Fig. 3 is a schematic illustration of such a retractor. The webbing grabber shown in Fig. 3 is not included in the shoulder belt retractor assemblies 60 and 66 but is, as described below, included in the lap belt retractor assemblies 84, 90.) The retractor has a vehicle sensing mechanism 74 that can activate a spool locking mechanism 76 to block rotation of the spool 72 in the belt withdrawal direction. The retractor also has a web sensing mechanism 78 that can active the spool locking mechanism 76 to block rotation of the spool 72 in the belt withdrawal direction upon sensing webbing acceleration in an amount exceeding a predetermined amount. Either sensing mechanism 74 or 78 can thus lock the spool 72.

Each one of the left and right shoulder belt retractors 60, 66 is configured to exhibit the known "film spool" effect in which webbing that is wound on the spool 72 under force from the return spring tends to wrap yet more tightly when tensioned in an emergency situation. As this effect occurs, the belt webbing tightens more slowly against the vehicle occupant, and the load on the occupant is accordingly limited. In the present invention, the amount of webbing on the spools 72 of the shoulder belt retractors 60 and 66 is metered so as to allow the film spool effect to be present and to act as a load limiter.

In addition, the right and left shoulder belt webbing portions 62 and 70 have an elongation factor, or characteristic, that is selected to provide a specific amount of elongation (stretch) under a specific load, thereby to limit the load that might be applied to the occupant under certain circumstances. In one example, the shoulder belts may have an elongation in the range of about 18% at 2,500 pounds, although more or less may be provided in this application or in other applications.

As described below, tuning the webbing elongation characteristic of the shoulder belt webbing portions 62 and 70, and the film spool effect of the shoulder belt retractors 60 and 66, help to provide an interaction of the shoulder belt system with the occupant's head/neck that limits neck side injury values.

The lap harness portions 32 and 34 are connected to the vehicle by respective right and left lap belt retractor assemblies 80 and 82. Thus, the right lap harness portion 32 is connected with the vehicle 12 by a right lap retractor assembly 80 that includes a right lap belt retractor 84 and a length of right lap belt webbing 86 that terminates in a quick disconnection 88. The quick disconnection 88 is engageable with the mating part 36 of the right lap harness portion 32.

Similarly, the left lap harness portion 34 is connected with the vehicle 12 by a left lap retractor assembly 82 that includes a left lap belt retractor 90 and a length of left lap belt webbing 92 that terminates in a quick disconnection 94. The quick disconnection 94 is engageable with the mating part 38 of the left lap harness portion 34.

As with the shoulder belt retractors 60 and 66, each one of the right and left lap belt retractors 84 and 90 is an emergency locking retractor having a spool 72 on which belt webbing is wound, a return spring, and both vehicle and web sensing mechanisms 74 and 78 that can actuate a spool locking mechanism 76 that blocks rotation of the spool in the belt withdrawal direction. The lap belt retractors 84 and 90 also exhibit the film spool effect, although this is not utilized on the lap belts, and in fact is specifically isolated and blocked out, as described below.

In addition, the right and left lap belt webbing portions 86 and 92 have an elongation factor, or characteristic, that is selected to provide a specific amount of elongation (stretch) under a specific load, thereby to limit the load that might be applied to the occupant under certain circumstances. In one example, the lap belts may have an elongation in the range of about 6% at 2,500 pounds, although more or less may be provided in this application or in other applications.

Each one of the right and left lap belt retractor assemblies 80 and 82 includes a respective webbing grabber 96 as shown schematically in Fig. 3. The webbing grabber 96 is provided to block out (isolate) the film spool effect that would otherwise occur with the lap belt retractors 84 and 90.

Specifically, standard belt webbing and belt webbing retractors are chosen for cost and ease of manufacturing. In a high mobility system such as the present application, to enable the occupant to move around sufficiently inside the vehicle, reach to the other side, for example, approximately 5 feet or more of lap belt webbing is needed; all this webbing must at times be stored on the spool of the lap belt retractor. This is much more webbing than is needed for an occupant who is considered to be seated at all times, moving around only slightly in a seat. (A similar, if not greater, amount of belt webbing is provided for the shoulder belts, as described below.) In the event of an accident, if a fully wound spool had this much belt webbing wound on it, the film spool effect would be too great to be controlled and to adequately control the webbing and thereby the occupant, for example, allowing the occupant to move too far laterally even after the spool is locked. Therefore, in the present high mobility system, for the two lap belt retractors 84 and 90, the film spool effect is blocked by using the webbing grabbers 96. (The shoulder belt retractors 60 and 66 both also have such a large amount of webbing, or more, and are subject to the same film spool effect issue but, as described below, that aspect is actually utilized to help position and control the occupant's upper torso.)

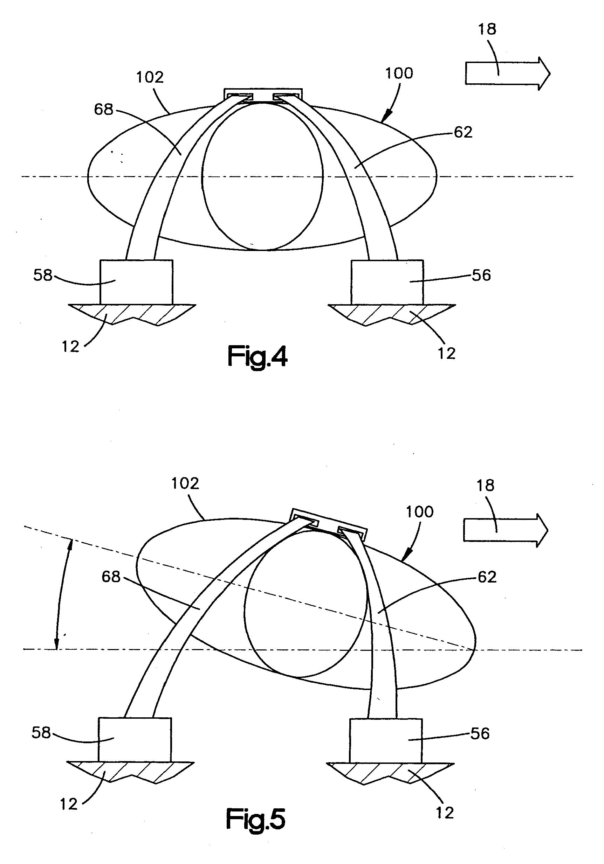

The webbing grabber 96 is an actuatable device associated with the retractor 84, 90 for clamping the belt webbing to prevent withdrawal of belt webbing from the lap belt retractor. The webbing grabber 96 may be of any suitable known construction including the one illustrated schematically in Fig. 4 having two wedge-shaped members and a series of teeth for engaging the lap belt webbing 86, 92 to prevent movement of the lap belt webbing through the webbing grabber. Other webbing grabber constructions are possible.

The webbing grabber 96 is actuated whenever either the web sensing mechanism 78 or the vehicle sensing mechanism 74 is triggered. Thus, the webbing grabber 96 is actuated whenever the spool 72 is locked. The engaged webbing grabber 96 effectively isolates the retractor spool 72, and the lap belt webbing 86 or 92 wound thereon, from the rest of the restraint system.

As a result, load limiting on the lap belts 86 and 92 is controlled, not by utilizing the film spool effect of the lap belt retractors 84 and 90, but rather by tailoring the elongation characteristics of the lap belt webbing 86, 92 itself. This characteristic is, as described below, selected to provide a desired amount, but no more, of lower torso movement after the initiation of retractor locking.

In this description, the terms "leading" and "trailing" are used to refer to the direction of travel of a vehicle occupant relative to the vehicle 12 (and to the restraint 10), when the vehicle is suddenly decelerated (or accelerated) by contact with an obstacle on the front end or by being struck from the back end. Thus, as one example, if the vehicle 12 is traveling forward, in the direction 18 (Fig. 1), and the occupant is on the right side of the vehicle, and the vehicle strikes an obstacle in the front and decelerates suddenly, the occupant tends to continue moving forward-to the top as viewed in Fig. 1, to the left as viewed in Fig. 2, and to the right as viewed in Figs. 4 and 5--and the right shoulder belt 62 is thereby the "leading" shoulder belt; the right lap belt 86 is the "leading" lap belt; the left shoulder belt 68 and left lap belt 92 are the "trailing" shoulder and lap belts, respectively.

In operation of the restraint 10, the occupant 100 connects the harness 30 with the buckle portion 88 of the right lap belt 86, the buckle portion 94 of the left lap belt 92, the tongue portion 64 of the right shoulder belt 62, and the tongue portion 70 of the left shoulder belt 68. The occupant is thereby fully restrained by the restraint 10, but free to move around. Specifically, because the four retractors 60, 66, 84 and 90 are emergency locking retractors, they are not locked during normal operation of the vehicle 12. As a result, the occupant 100 is free to move about in the vehicle 12, wearing the harness 30, extending and retracting belt webbing from one or more of the four retractors as the case may be.

In the event of an emergency, such as a crash of the vehicle 12, one or more or all of the retractors 60, 66, 84 and 90 lock, for example by an inertia sensing mechanism 74 or a webbing acceleration mechanism 78.

When a lap belt retractor 84 or 90 is locked, because of the large amount of belt webbing needed for the lap belt retractors because this is a high mobility system, the film spool effect would be too great and thus is not utilized. Instead, the associated webbing grabber 96 locks also. As a result, the lap belt webbing 86 or 92 that is wound on the retractor spool 72 is isolated and no lap belt webbing can be withdrawn from the retractor. Movement of the occupant 100 in a direction 18 against the locked lap belt webbing causes the lap belt webbing to tighten about the occupant, restraining movement of the occupant in that direction.

Specifically, when the occupant 100 moves suddenly in the leading direction 18, the trailing side lap belt webbing 92 is tensioned by the webbing grabber 96 of the lap belt retractor assembly 82, and restrains movement of the harness 30 (and thus the lower torso of the occupant 100) in the leading direction 18. This restraining of the occupant's lower torso does not directly restrain movement of the occupant's head in the leading direction 18. The head is still able to move in the leading direction 18, tipping sideways on the neck and loading the neck.

To minimize neck injuries arising from such movement, the amount of lap belt extension (due to elongation of the lap belt webbing 92) is, as described above, selected to be more than "zero", in order to cushion the restraining action of the lap belt on the occupant's lower torso. The provision of at least a small amount of lap belt extension enables the lower torso to decelerate over a longer period of time. Therefore, necessarily, the head also decelerates over a longer period of time, reducing neck side injury values.

In comparison, for example, the restraint shown in US Patent No. 7,481,399, includes Dyneema brand cable for the lap belt retractors, which cable does not exhibit any significant elongation at all. As a result, that restraint would immediately and rigidly lock the lower torso, which would result in unacceptably high neck side injury values for an occupant who is oriented sideways relative to the crash direction.

While the occupant 100 is moving relative to the lap belts 92 and 86, the occupant 100 is also moving relative to the shoulder belts 62 and 68. Specifically, the occupant 100 moves in the direction of travel 18 of the vehicle 12, into and against the leading shoulder belt 62. The leading shoulder belt 62, which is locked by the leading shoulder belt retractor 60, is engaged by the occupant's collarbone and perhaps neck. This engagement restrains movement of the occupant's upper torso and neck in the leading direction 18, as is essential. However, the shoulder belt 62 does not directly restrain the occupant's head, which is still able to move in the leading direction 18, tipping on the neck and loading the neck to the side.

To minimize neck injuries arising from such movement, applicant takes advantage of applicant's finding that the occupant's trailing shoulder 102 (Figs. 4 and 5) tends to pivot forward (away from the vehicle side wall, toward the centerline of the vehicle 12), as shown schematically in Figs. 4 and 5, and as described below. Such forward rotation of the trailing shoulder 102 places the occupant 100 in a more forward facing orientation in the vehicle 12, as compared to sitting purely sideways. An occupant's neck is better able to handle deceleration loads in the front to back direction than in the side to side direction. As a result, any forward rotation of the occupant's trailing shoulder 102 would tend to help reduce neck side injury values.

The restraint 10 is designed to allow and to encourage such rotation. Specifically, the use of two separate shoulder belts 62 and 68 is one aspect that enables such movement. The leading shoulder belt 62, when engaged by the occupant's neck and collarbone, acts as a pivot point, or fulcrum, about which the occupant's upper torso can pivot. The trailing shoulder belt 68 does not restrain such rotation, because the occupant's trailing shoulder 102 has moved in the leading direction 18 away from the trailing shoulder belt. The trailing shoulder 102 is thereby more free to rotate forward, to place the occupant 100 in a more forward facing orientation in the vehicle 12. As a result, neck side injury values can be reduced significantly.

In comparison, the restraint shown in US Patent No. 7,481,399, for example, has a shoulder belt assembly that engages at one point behind the occupant's neck, and that is controlled by a single ELR retractor. Such a shoulder belt assembly does not allow the occupant's trailing shoulder to rotate forward.

In addition, the shoulder belt webbing 62, 68 is selected to enable a desired amount of belt webbing elongation when tensioned. The desired amount of elongation is that amount which decelerates and restrains the occupant 100 as needed, but allows the deceleration to occur over a slightly extended period of time. In this manner, side loads on the occupant's neck are further reduced.

Still further, the shoulder belt retractors 60 and 66 are, as described above, enabled to use their film spool effect to provide load limiting. This is the case even though the length of shoulder belt webbing provided is at least as great as the length of lap belt webbing provided, a relatively large amount to accommodate the occupant's working range. That large amount of webbing when wound on a shoulder belt retractor spool 72 is not a problem because more upper torso movement is desired. The film spool effect is measured and, if necessary, compensated for by adjusting the webbing elongation effect.

Enabling increased upper torso movement via the shoulder belts 62 and 68, in a restraint situation, enables increase lateral torso movement, which in and of itself helps to reduce the neck side injury values. Enabling increased upper torso movement via the shoulder belts 62 and 68, in a restraint situation, also enables increased rotation of the trailing shoulder 102, in the total amount of some 10 to 20 degrees, which is beneficial as described above.

The amount of shoulder belt extension (due to the combination of elongation of the shoulder belt webbing and film spool effect of the shoulder belt retractors) is greater than the amount of lap belt extension.

## Claims

1. A method of restraining a high mobility vehicle occupant who is facing sideways in the vehicle relative to the vehicle's direction of travel in the event of a vehicle collision, the occupant having a leading shoulder and a trailing shoulder, the method comprising the steps of:
activating one or more belt webbing retractors of the restraint in the event of a vehicle collision;
allowing the occupant's trailing shoulder to rotate forward during the vehicle collision in a controlled, limited manner after the restraint is activated; and
allowing the occupant's lower torso to move in the vehicle direction of travel during the vehicle collision in a controlled, limited manner after the restraint is activated.

2. A method as set forth in claim 1, wherein the step of allowing the occupant's trailing shoulder to rotate forward includes the steps of restraining the leading side of the occupant's upper torso with a leading shoulder belt associated with a leading shoulder belt retractor, and allowing the trailing side of the occupant's upper torso to draw forward a trailing shoulder belt associated with a separate trailing shoulder belt retractor.

3. A method as set forth in claim 2, wherein each of the leading shoulder belt retractor and trailing shoulder belt retractor includes a spool having its belt webbing wound thereon, and the step of allowing the occupant's trailing shoulder to rotate forward includes the step of utilizing the film spool effect of the leading and trailing shoulder belt retractors to promote shoulder belt elongation.

4. A method as set forth in claim 2 or 3 and further including the step of allowing shoulder belt elongation in a selected amount during the vehicle collision.

5. A method as set forth in any preceding claim, wherein the step of allowing the occupant's lower torso to move in the vehicle direction of travel during the vehicle collision in a controlled, limited manner after the restraint is activated includes the steps of:
restraining the occupant's lower torso with a trailing lap belt associated with a trailing lap belt retractor that is subject to a film spool effect; and
blocking withdrawal of belt webbing from the spool of the trailing lap belt retractor with a webbing grabber associated therewith.

6. A method as set forth in claim 5 and further including the step of allowing lap belt elongation in a selected amount during the vehicle collision.

7. A high mobility restraint for a vehicle occupant who is facing sideways in the vehicle relative to the vehicle's direction of travel and who has a leading shoulder and a trailing shoulder, the restraint comprising:
means for activating one or more belt webbing retractors of the restraint in the event of a vehicle collision;
means for allowing the occupant's trailing shoulder to rotate forward during the vehicle collision in a controlled, limited manner after the restraint is activated; and
means for allowing the occupant's lower torso to move in a controlled, limited manner in the vehicle direction of travel during the vehicle collision after the restraint is activated.

8. A restraint as set forth in claim 7, wherein the means for allowing the occupant's trailing shoulder to rotate forward comprises:
a first shoulder belt for the leading shoulder of the occupant and a first shoulder belt retractor for retracting the first shoulder belt, the first shoulder belt made from belt webbing having a selected elongation characteristic, the first shoulder belt retractor exhibiting a film spool effect; and
a second shoulder belt for the trailing shoulder of the occupant and a second shoulder belt retractor for retracting the second shoulder belt, the second shoulder belt made from belt webbing having a selected elongation characteristic, the second shoulder belt retractor exhibiting a film spool effect;

9. A restraint as set forth in claim 7 or 8, wherein the means for allowing the occupant's lower torso to move in a controlled, limited manner in the vehicle direction of travel during the vehicle collision after the restraint is activated comprises a trailing lap belt for restraining the occupant's lower torso, a trailing lap belt retractor associated with the trailing lap belt and exhibiting a film spool effect, and a webbing grabber associated with the belt webbing of the spool of the trailing lap belt retractor.

10. A high mobility belt webbing restraint system for helping to restrain a side facing occupant of a vehicle, the occupant having a leading shoulder and a trailing shoulder, the system comprising:
a shoulder restraint assembly including a first shoulder belt for the leading shoulder of the occupant and a first shoulder belt retractor for retracting the first shoulder belt, the first shoulder belt being made from belt webbing having a selected elongation characteristic, and the first shoulder belt retractor exhibiting a film spool effect;
the shoulder restraint assembly also including a second shoulder belt for the trailing shoulder of the occupant and a second shoulder belt retractor for retracting the second shoulder belt, the second shoulder belt being made from belt webbing having a selected elongation characteristic, and the second shoulder belt retractor exhibiting a film spool effect;
a lap restraint assembly including a first lap belt for the trailing side of the occupant, a first lap belt retractor for retracting the first lap belt, and a first webbing grabber associated with the first lap belt retractor, the first lap belt being made from belt webbing having a selected elongation characteristic; and
the lap restraint assembly also including a second lap belt for the leading side of the occupant and a second lap belt retractor for retracting the second lap belt and a second webbing grabber associated with the second lap belt retractor, the second lap belt being made from belt webbing having a selected elongation characteristic.

11. A system as set forth in claim 10, wherein each of the first and second webbing grabbers is actuated in response to locking of its associated retractor block withdrawal of belt webbing from its associated retractor in the event of a vehicle collision.
